# EUROPÄISCHE PATENTSCHRIFT

(11) **EP 3 284 119 B1**
(45) Veröffentlichungstag und Bekanntmachung des Hinweises auf die Patenterteilung: **26.02.2020**
(21) Anmeldenummer: 16710471.0
(22) Anmeldetag: 18.03.2016
(51) Int. Cl.: H01M 2/02, H01M 2/22, H01M 2/30, H01M 10/04, H01M 2/26, H01M 10/0587

(54) **BATTERIE MIT PRISMATISCHEM METALLGEHÄUSE**
BATTERY HAVING A PRISMATIC METAL HOUSING
BATTERIE COMPRENANT UN BOÎTIER MÉTALLIQUE PRISMATIQUE

(30) Priorität: 17.04.2015 DE 102015207070
(43) Veröffentlichungstag der Anmeldung: 21.02.2018
(73) Patentinhaber: VARTA Microbattery GmbH, 73479 Ellwangen Jagst (DE)
(72) Erfinder: ERNSPERGER, Jürgen, 73491 Neuler (DE); BRENNER, Rolf, 73479 Ellwangen (DE)
(74) Vertreter: Patentanwaltskanzlei Cartagena
(86) Internationale Anmeldenummer: PCT/EP2016/056014
(87) Internationale Veröffentlichungsnummer: WO 2016/165911

(56) Entgegenhaltungen:
- CN-A- 101 931 105
- DE-A1- 10 047 206
- DE-A1-102010 035 580
- DE-U1- 20 204 027
- JP-A- 2000 090 977

## Beschreibung

Die nachfolgend beschriebene Erfindung betrifft eine Batterie mit einem prismatischen Metallgehäuse.

Der Begriff "Batterie" meinte ursprünglich mehrere in Serie geschaltete galvanische Zellen. Heute werden jedoch auch einzelne galvanische Zellen (Einzelzellen) häufig als Batterie bezeichnet. Bei der Entladung einer galvanischen Zelle findet eine energieliefernde chemische Reaktion statt, welche sich aus zwei elektrisch miteinander gekoppelten, aber räumlich voneinander getrennten Teilreaktionen zusammensetzt. An der negativen Elektrode werden in einem Oxidationsprozess Elektronen freigesetzt, resultierend in einem Elektronenstrom über einen äußeren Verbraucher zur positiven Elektrode, von der eine entsprechende Menge an Elektronen aufgenommen wird. An der positiven Elektrode findet also ein Reduktionsprozess statt. Zeitgleich kommt zu einem der Elektrodenreaktion entsprechenden lonenstrom innerhalb der Zelle. Dieser lonenstrom wird durch einen Ionen leitenden Elektrolyten gewährleistet. In sekundären Zellen und Batterien ist diese Entladereaktion reversibel, es besteht also die Möglichkeit, die bei der Entladung erfolgte Umwandlung chemischer Energie in elektrische umzukehren.

Unter den bekannten sekundären Batterien werden vergleichsweise hohe Energiedichten insbesondere von Lithium-Ionen-Batterien erreicht, also von Batterien, bei denen bei Lade- und Entladeprozessen Lithium-Ionen von einer Elektrode zur anderen wandern.

Eine Lithium-Ionen-Batterie umfasst mindestens eine Einzelzelle mit mindestens einer positiven und mindestens einer negativen Elektrode. Insbesondere kann sie eine Einzelzelle in Form eines Wickels umfassen.

In vielen Fällen ist die mindestens eine Einzelzelle einer Lithium-Ionen-Batterie in den Innenraum eines prismatischen Metallgehäuses eingeschoben. Üblicherweise setzt sich das Metallgehäuse aus einem Behältnis mit einem rechteckigen Gehäuseboden und vier im rechten Winkel dazu angeordneten Seitenwänden sowie einem Gehäusedeckel, der im Wesentlichen die gleiche Form und Größe wie der Gehäuseboden aufweist, zusammen. Mit anderen Worten, es ist bevorzugt quaderförmig. Der Gehäusedeckel ist in aller Regel kaum profiliert und kann als näherungsweise eben bezeichnet werden. Meist wird das Metallgehäuse verschlossen, indem die Ränder des Gehäusedeckels mit dem Öffnungsrand des Behältnisses verschweißt werden.

Zur Kontaktierung eines außerhalb des Gehäuses befindlichen elektrischen Verbrauchers umfasst die Batterie meist mindestens einen Kontaktpol, an den der Verbraucher angeschlossen werden kann. Als Kontaktpol dient meist ein auf einer Außenseite des Gehäuses angeordnetes metallisches Bauteil.

Die Batterie kann zwei Kontaktpole umfassen, von denen einer (der sogenannte positive Kontaktpol) über einen ersten vom Metallgehäuse elektrisch isolierten Polbolzen mit der mindestens einen positiven und der andere (der sogenannte negative Kontaktpol) über einen zweiten vom Metallgehäuse elektrisch isolierten Polbolzen mit der mindestens einen negativen Elektrode verbunden ist. Es ist aber auch möglich, dass das Metallgehäuse selbst als positiver oder negativer Kontaktpol oder zumindest als elektrische Brücke zwischen einem der Kontaktpole und der mindestens einen positiven oder der mindestens einen negativen Elektrode fungiert. In diesem Fall muss das Gehäuse elektrisch mit der mindestens einen positiven Elektrode oder der mindestens einen negativen Elektrode verbunden werden. Bevorzugt wird hierzu durch Verschweißung ein elektrischer Kontakt zwischen einem zu der zu verbindenden Elektrode gehörigen Stromableiter und der in den Gehäuseinnenraum weisenden Seite des Gehäusebodens gebildet.

Insbesondere wenn die Batterie eine Einzelzelle in Form eines Wickels umfasst, führt dies zu konstruktiven Problemen. Typischerweise weist ein solcher Wickel eine erste und eine zweite flache Stirnseite auf sowie einen umlaufenden Mantel, der die beiden Stirnseiten verbindet, wobei aus der ersten und der zweiten Stirnseite jeweils Stromableiter (sogenannte Ableiterfahnen) austreten, über die Strom aus und zu den Elektroden fließen kann. Aus naheliegenden Gründen sind Ableiterfahnen entgegengesetzter Polarität räumlich voneinander getrennt. Bevorzugt treten Ableiterfahnen unterschiedlicher Polarität auch an unterschiedlichen Stirnseiten aus, beispielsweise mit der mindestens einen positiven Elektrode verbundene Ableiterfahnen an der ersten Stirnseite und mit der mindestens einen negativen Elektrode verbundene Ableiterfahnen an der zweiten Stirnseite. Dies ist so beispielsweise aus der CN 101931105 A bekannt.

Da die Verschweißung der aus einer Stirnseite eines solchen Wickels austretenden Ableiterfahnen mit der in den Gehäuseinnenraum weisenden Seite des Gehäusebodens erfolgen muss, bevor der Wickel in das Metallgehäuse eingeschoben wird, müssen die Ableiterfahnen entweder sehr lang gewählt oder mittels eines angeschweißten Leiters verlängert werden. Beim der Verschweißung nachgeschalteten Einschieben des Wickels in das Metallgehäuse müssen diese Ableiterfahnen oder Verlängerungen gefaltet und auf dem Boden abgelegt werden. Dadurch vergrößert sich das nicht für Elektrodenmaterial nutzbare Totvolumen innerhalb des Metallgehäuses.

Der vorliegenden Erfindung lag die Aufgabe zugrunde, Batterien, insbesondere Lithium-Ionen-Batterien, bereitzustellen, die ein prismatisches Metallgehäuse aufweisen und bei denen die genannten Probleme nicht oder nur in verringertem Maß auftreten.

Diese Aufgabe wird gelöst durch die Batterie mit den Merkmalen des Anspruchs 1. Bevorzugte Ausführungsformen der erfindungsgemäßen Batterie sind in den abhängigen Ansprüchen 2 bis 5 angegeben. Auch das Verfahren gemäß Anspruch 6 trägt zur Lösung der gestellten Aufgabe bei. Eine bevorzugte Ausführungsform des erfindungsgemäßen Verfahrens ist in Anspruch 7 angegeben. Der Wortlaut sämtlicher Ansprüche wird hiermit durch Bezugnahme zum Inhalt der vorliegenden Beschreibung gemacht.

Gegenstand der Erfindung ist eine Batterie mit einem prismatischen Metallgehäuse mit einer Gehäuseinnenseite und einer Gehäuseaußenseite. Das Gehäuse schirmt die mindestens eine Einzelzelle von ihrer Umgebung ab und ist bevorzugt gas- und flüssigkeitsdicht ausgebildet.

Innerhalb des Metallgehäuses ist mindestens eine Einzelzelle mit mindestens einer positiven und mindestens einer negativen Elektrode angeordnet. Bei der Einzelzelle handelt es sich bevorzugt um eine Zelle auf Lithium-Ionen-Basis. Entsprechend ist die erfindungsgemäße Batterie bevorzugt eine Lithium-Ionen-Batterie.

Die Einzelzelle liegt bevorzugt in Form eines Verbundes aus Elektroden- und Separatorfolien mit der Sequenz positive Elektrode / Separator / negative Elektrode vor. Bevorzugt umfassen die Elektroden dabei metallische Stromkollektoren, die meist in Form von zwei- oder dreidimensionalen Flächengebilden vorliegen. Bei Lithium-Ionen-Batterien findet sich etwa auf der Seite der positiven Elektrode bevorzugt ein Netz oder eine Folie aus Aluminium, beispielsweise aus Aluminiumstreckmetall oder einer gelochten Aluminiumfolie. Auf der Seite der negativen Elektrode werden als Stromkollektoren meist Netze oder Folien aus Kupfer verwendet.

Die erfindungsgemäße Batterie umfasst einen elektrisch mit der mindestens einen positiven oder der mindestens einen negativen Elektrode verbundenen sowie vom Metallgehäuse elektrisch isolierten Polbolzen, an den ein außerhalb des Metallgehäuses angeordneter elektrischer Verbraucher angeschlossen werden kann. Dieser Polbolzen besteht bevorzugt aus einem Metall wie Kupfer. Bei der elektrischen Isolierung zwischen dem Polbolzen und dem Metallgehäuse kann es sich beispielsweise um eine isolierfähige Masse, wie sie in der DE 100 47 206 A1 beschrieben ist, oder um eine Kunststofffolie, handeln.

Das Metallgehäuse der Batterie umfasst einen rechteckigen Boden mit einer Bodeninnen- und einer Bodenaußenseite und einen rechteckigen Deckel mit einer Deckelinnen- und einer Deckelaußenseite, dessen Größe und Form mit der des Bodens im Wesentlichen übereinstimmen. Weiterhin umfasst das Metallgehäuse bevorzugt vier rechteckige, den Boden und den Deckel verbindende Seitenelemente mit jeweils einer Innen- und einer Außenseite. Der Boden und der Deckel sind bevorzugt parallel zueinander ausgerichtet. Vorzugsweise schließen der Boden und der Deckel sowie die Seitenelemente mit allen unmittelbar angrenzenden Seitenelementen jeweils einen rechten Winkel ein. Bevorzugt ist das Gehäuse also quaderförmig ausgebildet.

Bevorzugt wird das Metallgehäuse bei der Montage aus einem Behältnis umfassend den Boden und die Seitenelement und einem dazu passenden Deckel zusammengesetzt. Der Deckel wird in der Regel hierzu mit den Seitenelementen verschweißt.

Die Seitenelemente sowie der Boden und der Deckel des Metallgehäuses weisen vorzugsweise über ihre gesamte Fläche eine im Wesentlichen einheitliche und gleichmäßige Dicke auf. Diese bewegt sich beispielsweise zwischen 0,3 mm und 3 mm.

Der Deckel des Metallgehäuses weist eine Durchbrechung auf, durch die der vom Metallgehäuse elektrisch isolierte Polbolzen aus dem Inneren des Metallgehäuses nach außen geführt ist. In bevorzugten Ausführungsformen bildet ein außerhalb des Gehäuses befindlicher Teil des Polbolzens einen Kontaktpol oder steht mit einem separaten Kontaktpol in elektrischem Kontakt.

Die Batterie umfasst eine oder mehrere gewickelte Einzelzellen (coil). Besonders bevorzugt umfasst sie allerdings eine Einzelzelle in Form eines Wickels, der eine erste und eine zweiten Stirnseite aufweist. Die Stirnseiten sind bevorzugt flach und parallel zueinander ausgerichtet. Sie werden verbunden über einen umlaufenden Mantel.

Der Wickel ist innerhalb des Metallgehäuses derart angeordnet, dass die erste Stirnseite in Richtung des Bodens und die zweite Stirnseite in Richtung des Deckels weist.

Bevorzugt sind die Stirnseiten sowie der Boden und der Deckel alle parallel zueinander ausgerichtet.

Aus der ersten Stirnseite treten Ableiterfahnen aus, die elektrisch mit dem Boden des Metallgehäuses verbunden sind, während aus der zweiten Stirnseite Ableiterfahnen austreten, die elektrisch mit dem vom Metallgehäuse elektrisch isolierten Polbolzen verbunden sind. Wie bei den eingangs diskutierten Batterien kann über diese Ableiterfahnen Strom aus und zu den Elektroden fließen. Zu diesem Zweck sind die Ableiterfahnen bevorzugt mit den erwähnten Stromkollektoren in den Elektroden elektrisch verbunden. In einigen bevorzugten Ausführungsformen kann es sich bei den Ableiterfahnen auch um nicht mit Elektrodenmaterial bedeckte Teile der Stromkollektoren handeln.

In Übereinstimmung mit diesen Ausführungen ist es bevorzugt, dass die Ableiterfahnen aus dem gleichen Material wie die Stromkollektoren bestehen.

Erfindungsgemäß sind die aus der ersten Stirnseite austretenden Ableiterfahnen an ein elektrisch leitendes Sammel- und Positionierungsmittel fixiert, während gleichzeitig der Boden eine Aufnahme für das Sammel- und Positionierungsmittel aufweist, in die es eingeschoben und in der es fixiert ist.

Das Sammel- und Positionierungsmittel dient zum einen dazu, die aus der ersten Stirnseite austretenden Ableiterfahnen zusammenzufassen bzw. zu sammeln. In bevorzugten Ausführungsformen ist oder umfasst das Sammel- und Positionierungsmittel eine metallische Klemmschiene, in der die Ableiterfahnen fixiert sind. Die Klemmschiene kann beispielsweise zwei über ein Joch miteinander verbundene, parallel zueinander verlaufende Klemmschenkel aufweisen, zwischen denen die Ableiterfahnen fixiert sind. Bevorzugt können die Ableiterfahnen zur Fixierung mit den Klemmschenkeln verschweißt sein.

Zum anderen kann das Sammel- und Positionierungsmittel dabei behilflich sein, den Wickel innerhalb des Metallgehäuses zu positionieren, insbesondere seine Positionierung auf dem Boden des Metallgehäuses erleichtern.

Bei einer bevorzugten Ausführungsform zur Montage der erfindungsgemäßen Batterie werden zunächst das Sammel- und Positionierungsmittel auf der ersten Stirnseite des Wickels angeordnet, bevorzugt in einer zentralen Position, und die Ableiterfahnen insbesondere durch Verschweißung, an oder in dem Sammel- und Positionierungsmittel fixiert. In einem Folgeschritt wird der Wickel mit der ersten Stirnseite voran in ein Behältnis mit einem rechteckigen Boden und vier im rechten Winkel dazu angeordneten Seitenelementen eingeschoben, bis das Sammel- und Positionierungsmittel den Boden erreicht. Die gewünschte Position des Wickels auf dem Boden wird durch die Positionierung der Aufnahme vorgegeben, die in Form und Größe auf das Sammel- und Positionierungsmittel abgestimmt ist. Einmal in die Aufnahme eingeschoben, kann das Sammel- und Positionierungsmittel in dieser fixiert werden, beispielsweise durch Verschweißung mit dem Boden.

Erfindungsgemäß weist der Boden als Aufnahme für das Sammel- und Positionierungsmittel eine Durchbrechung auf. Der Vorteil dieser technischen Maßnahme ist offensichtlich. Das Sammel- und Positionierungsmittel ist durch die Durchbrechung auch von außerhalb des Metallgehäuses zugänglich. So kann beispielsweise eine Verschweißung des Sammel- und Positionierungsmittels mit dem Boden erfolgen, nachdem das Metallgehäuse durch Aufsetzen eines Deckels bereits verschlossen wurde. Insbesondere erübrigt sich auch die Verwendung und damit die bislang erforderliche Faltung der langen oder verlängerten Ableiterfahnen.

Es ist bevorzugt, dass die aus der ersten Stirnseite austretenden Ableiterfahnen mit der positiven und die aus der zweiten Stirnseite austretenden Ableiterfahnen mit der negativen Elektrode verbunden sind. Mit anderen Worten, vorzugsweise ist das Metallgehäuse positiv gepolt, während der vom Metallgehäuse elektrisch isolierte Polbolzen negativ gepolt ist.

In bevorzugten Ausführungsformen bestehen die aus der ersten Stirnseite austretenden Ableiterfahnen und/oder das Sammel- und Positionierungsmittel und/oder der Boden des Metallgehäuses und/oder das gesamte Metallgehäuse aus Aluminium oder einer Aluminiumlegierung.

Die erfindungsgemäße Batterie kann in bevorzugten Ausführungsformen neben dem vom Metallgehäuse elektrisch isolierten Polbolzen einen weiteren Polbolzen umfassen, der durch eine Durchbrechung im Metallgehäuse, insbesondere im Deckel des Metallgehäuses, aus dem Inneren des Metallgehäuses nach außen geführt ist, gleichzeitig jedoch über das Metallgehäuse und das Sammel- und Positionierungsmittel elektrisch mit einer der Elektroden verbunden ist. Bevorzugt ist in dieser Ausführungsform der vom Metallgehäuse elektrisch isolierte Polbolzen mit der mindestens einen negativen Elektrode verbunden, während der weitere Polbolzen über das Metallgehäuse und das Sammel- und Positionierungsmittel elektrisch mit der mindestens einen positiven Elektrode verbunden ist.

Eine derartige Ausführungsform kann beispielsweise sinnvoll sein, wenn in den Strompfad zwischen dem weiteren Polbolzen und dem Gehäuse eine Sicherung integriert ist, die den elektrischen Kontakt zwischen dem weiteren Polbolzen und dem Gehäuse unterbrechen kann. Als Sicherung kommt insbesondere eine innerhalb des Metallgehäuses angeordnete thermische oder pneumatisch-mechanische Sicherung in Frage.

Gegenstand der vorliegenden Erfindung ist auch ein Verfahren zur Herstellung einer erfindungsgemäßen Batterie. Das Verfahren umfasst die folgenden Schritte:
- Bereitstellen einer Einzelzelle mit mindestens einer positiven und mindestens einer negativen Elektrode, die in Form eines Wickels vorliegt, der eine erste und eine zweite Stirnseite aufweist, wobei aus der ersten Stirnseite Ableiterfahnen austreten, die mit der positiven Elektrode verbunden sind, und aus der zweiten Stirnseite Ableiterfahnen austreten, die mit der negativen Elektrode verbunden sind,
- Anordnen eines Sammel- und Positionierungsmittels auf einer der Stirnseiten des Wickels und Fixierung der aus dieser Stirnseite austretenden Ableiterfahnen in oder an dem Sammel- und Positionierungsmittel,
- Bereitstellen eines Behältnisses mit einem rechteckigen Boden und vier im rechten Winkel dazu angeordneten Seitenelementen, deren freie Ränder eine Öffnung bilden, wobei der Boden eine Aufnahme für das Sammel- und Positionierungsmittel aufweist, in die es einschiebbar und in der es fixierbar ist, und wobei der Boden als Aufnahme für das Sammel- und Positionierungsmittel eine Durchbrechung aufweist, so dass das Sammel- und Positionierungsmittel von außerhalb des Metallgehäuses zugänglich ist,
- Einschieben des Wickels mit der mit dem Sammel- und Positionierungsmittel versehenen Stirnseite voran in das Behältnis, bis das das Sammel- und Positionierungsmittel den Boden erreicht und in die Aufnahme eingeschoben ist,
- Fixierung des Sammel- und Positionierungsmittels in der Aufnahme, und
- Schließen der Öffnung mittels eines rechteckigen Deckels.

Das Fixieren der Ableiterfahnen in oder an dem Sammel- und Positionierungsmittel sowie des Sammel- und Positionierungsmittels in der Aufnahme erfolgt bevorzugt mittels Verschweißung, insbesondere mittels eines Lasers.

Die im Rahmen des Verfahrens zum Einsatz kommenden Batteriekomponenten wurden sämtlich bereits im Zusammenhang mit der erfindungsgemäßen Batterie erläutert. An Stelle einer Wiederholung der Erläuterungen wird daher auf die entsprechenden obigen Erläuterungen verwiesen.

In einer bevorzugten Ausführungsform des Verfahrens wird auf die mit dem Sammel- und Positionierungsmittel versehene Stirnseite vor dem Einschieben des Deckels ein Formteil aus Kunststoff aufgesetzt, das die Stirnseite mit Ausnahme des Sammel- und Positionierungsmittels vollständig abdeckt. Bei dem Formteil handelt es sich bevorzugt um einen Tiefziehling aus einer Kunststofffolie mit einer mittleren Dicke zwischen 80µm und 120 µm. Als Folienmaterial kommen insbesondere PPS (Polyphenylensulfid) und PEEK (Polyetheretherketon) in Frage.

Weitere Merkmale der Erfindung sowie aus der Erfindung resultierende Vorteile ergeben sich aus der nachfolgenden Beschreibung der Zeichnungen, anhand derer die Erfindung illustriert wird. Die nachfolgend beschriebenen Ausführungsformen dienen lediglich zur Erläuterung und zum besseren Verständnis der Erfindung und sind in keiner Weise einschränkend zu verstehen.

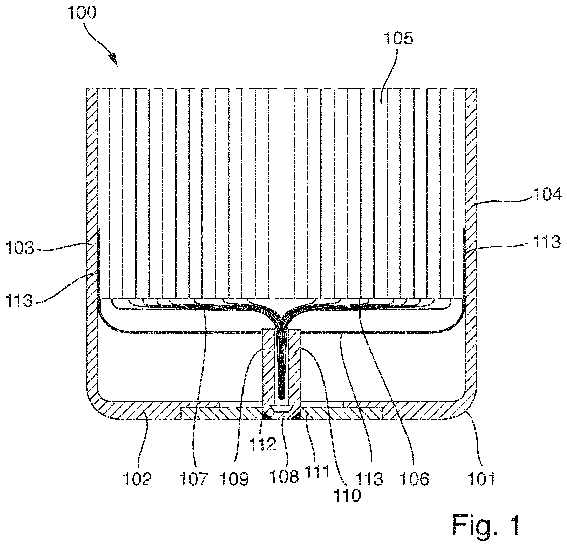

Fig. 1 zeigt einen Querschnitt des Bodenbereichs einer Ausführungsform einer erfindungsgemäßen Batterie 100 (schematische Darstellung). Diese weist ein prismatisches Aluminiumgehäuse 101 mit dem Boden 102 und vier Seitenelementen (in der Querschnittsdarstellung sind lediglich die zwei Seitenelemente 103 und 104 sichtbar) auf. In dem Gehäuse 101 ist eine Einzelzelle 105 angeordnet. Diese weist die Form eines Wickels auf. An der dem Boden 102 zugewandten ersten Stirnseite 106 des Wickels treten mehrere Ableiterfahnen 107 aus, die in dem Sammel- und Positionierungsmittel 108 zusammengefasst sind. Auf die Stirnseite 106 ist ein Formteil 113 aus Kunststoff aufgesetzt, das die Stirnseite 106 mit Ausnahme des Sammel- und Positionierungsmittels 108 vollständig abdeckt

Das Sammel- und Positionierungsmittel 108 ist als Klemmschiene ausgebildet, zwischen deren Klemmschenkeln 109 und 110 die Ableiterfahnen 107 durch Verschweißung fixiert sind. In den Boden 102 ist ein Kontaktelement 111 versenkt, das mittig eine Durchbrechung 112 aufweist. Diese dient als Aufnahme für das Sammel- und Positionierungsmittel 108, das in die Durchbrechung 112 eingeschoben und durch Verschweißung mit dem Kontaktelement 111 in dieser fixiert ist.

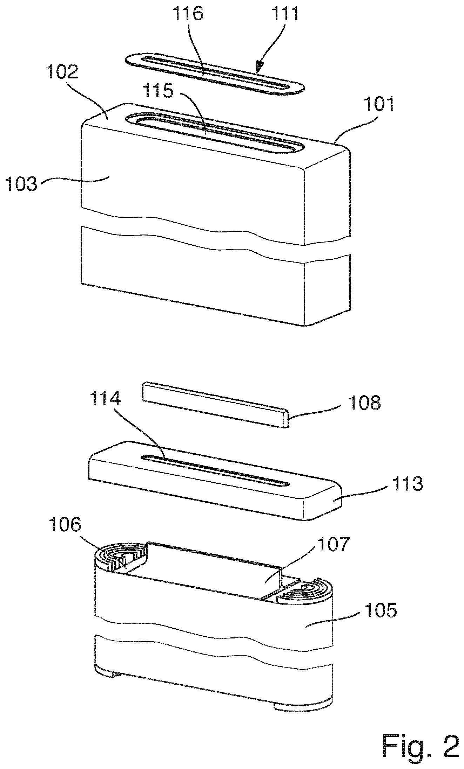

Fig. 2 zeigt eine Aufsicht auf die wesentlichen Komponenten des in Fig. 1 dargestellten Bodenbereichs. Dargestellt ist die Einzelzelle 105 mitsamt den aus der Stirnseite 106 austretenden Ableiterfahnen 107. Diese sind bereits mittig zusammengelegt, um im nächsten Schritt zwischen die Schenkel des als Klemmschiene ausgebildeten Sammel- und Positionierungsmittels 108 geschoben zu werden. Das Formteil 113 weist wiederum mittig eine Durchbrechung 114 für die Klemmschiene 108 auf. Das prismatische Aluminiumgehäuse 101 umfasst den Boden 102 mit einer zentralen Ausnehmung 115, in der das Kontaktelement 111 versenkt werden kann.

## Patentansprüche

1. Batterie mit
• einem prismatischen Metallgehäuse mit einer Gehäuseinnenseite und einer Gehäuseaußenseite,
• mindestens einer Einzelzelle mit mindestens einer positiven und mindestens einer negativen Elektrode, die innerhalb des Metallgehäuses angeordnet ist, und
• einem elektrisch mit der mindestens einen positiven oder der mindestens einen negativen Elektrode verbundenen sowie vom Metallgehäuse elektrisch isolierten Polbolzen, an den ein außerhalb des Gehäuses angeordneter elektrischer Verbraucher angeschlossen werden kann,
wobei
• das Metallgehäuse einen rechteckigen Boden mit einer Bodeninnen- und einer Bodenaußenseite, einen rechteckigen Deckel mit einer Deckelinnen- und einer Deckelaußenseite, dessen Größe und Form mit der des Bodens im Wesentlichen übereinstimmen, sowie vier rechteckige, den Boden und den Deckel verbindende Seitenelemente mit jeweils einer Innen- und einer Außenseite umfasst,
• der Deckel eine Durchbrechung aufweist, durch die der vom Metallgehäuse elektrisch isolierte Polbolzen aus dem Inneren des Metallgehäuses nach außen geführt ist,
• die mindestens eine Einzelzelle in Form eines Wickels mit einer ersten und einer zweiten Stirnseite vorliegt und die erste Stirnseite in Richtung des Bodens und die zweite Stirnseite in Richtung des Deckels weist,
• aus der ersten Stirnseite Ableiterfahnen austreten, die elektrisch mit dem Boden des Metallgehäuses verbunden sind,
• aus der zweiten Stirnseite Ableiterfahnen austreten, die elektrisch mit dem vom Metallgehäuse elektrisch isolierten Polbolzen verbunden sind,
• die aus der ersten Stirnseite austretenden Ableiterfahnen an ein elektrisch leitendes Sammel- und Positionierungsmittel fixiert sind, und
• der Boden eine Aufnahme für das Sammel- und Positionierungsmittel aufweist, in die es eingeschoben und in der es fixiert ist, **dadurch gekennzeichnet, dass**
• der Boden als Aufnahme für das Sammel- und Positionierungsmittel eine Durchbrechung aufweist, so dass das Sammel- und Positionierungsmittel von außerhalb des Metallgehäuses zugänglich ist.

2. Batterie nach Anspruch 1, **dadurch gekennzeichnet, dass** das Sammel- und Positionierungsmittel eine metallische Klemmschiene ist, in der die Ableiterfahnen fixiert sind.

3. Batterie nach einem der vorhergehenden Ansprüche, **dadurch gekennzeichnet, dass** die aus der ersten Stirnseite austretenden Ableiterfahnen mit der positiven und die aus der zweiten Stirnseite austretenden Ableiterfahnen mit der negativen Elektrode verbunden sind.

4. Batterie nach einem der vorhergehenden Ansprüche, **dadurch gekennzeichnet, dass** die aus der ersten Stirnseite austretenden Ableiterfahnen und/oder das Sammel- und Positionierungsmittel und/oder der Boden des Metallgehäuses und/oder das gesamte Metallgehäuse aus Aluminium oder einer Aluminiumlegierung bestehen.

5. Batterie nach einem der vorhergehenden Ansprüche, **dadurch gekennzeichnet, dass** sie neben dem vom Metallgehäuse elektrisch isolierten Polbolzen einen weiteren Polbolzen umfasst, der durch eine Durchbrechung im Metallgehäuse, insbesondere im Deckel des Metallgehäuses, aus dem Inneren des Metallgehäuses nach außen geführt ist und über das Metallgehäuse und das Sammel- und Positionierungsmittel elektrisch mit einer der Elektroden verbunden ist.

6. Verfahren zur Herstellung einer Batterie nach einem der vorhergehenden Ansprüche, umfassend die Schritte
• Bereitstellen einer Einzelzelle mit mindestens einer positiven und mindestens einer negativen Elektrode, die in Form eines Wickels vorliegt, der eine erste und eine zweite Stirnseite aufweist, wobei aus der ersten Stirnseite Ableiterfahnen austreten, die mit der positiven Elektrode verbunden sind, und aus der zweiten Stirnseite Ableiterfahnen austreten, die mit der negativen Elektrode verbunden sind,
• Anordnen eines Sammel- und Positionierungsmittels auf einer der Stirnseiten des Wickels und Fixierung der aus dieser Stirnseite austretenden Ableiterfahnen in oder an dem Sammel- und Positionierungsmittel,
• Bereitstellen eines Behältnisses mit einem rechteckigen Boden und vier im rechten Winkel dazu angeordneten Seitenelementen, deren freie Ränder eine Öffnung bilden, wobei der Boden eine Aufnahme für das Sammel- und Positionierungsmittel aufweist, in die es einschiebbar und in der es fixierbar ist, wobei der Boden als Aufnahme für das Sammel- und Positionierungsmittel eine Durchbrechung aufweist, so dass das Sammel- und Positionierungsmittel von außerhalb des Metallgehäuses zugänglich ist,,
• Einschieben des Wickels mit der mit dem Sammel- und Positionierungsmittel versehenen Stirnseite voran in das Behältnis, bis das das Sammel- und Positionierungsmittel den Boden erreicht und in die Aufnahme eingeschoben ist,
• Fixierung des Sammel- und Positionierungsmittels in der Aufnahme, und
• Schließen der Öffnung mittels eines rechteckigen Deckels.

7. Verfahren nach Anspruch 6, **dadurch gekennzeichnet, dass** auf die mit dem Sammel- und Positionierungsmittel versehene Stirnseite vor dem Einschieben des Deckels ein Formteil aus Kunststoff aufgesetzt wird, das die Stirnseite mit Ausnahme des Sammel- und Positionierungsmittels vollständig abdeckt.

## Claims

1. Battery having
• a prismatic metal housing having a housing inner side and a housing outer side,
• at least one individual cell having at least one positive and at least one negative electrode, which is arranged inside the metal housing, and
• a pole stud, which is electrically connected to the at least one positive or the at least one negative electrode and is electrically insulated from the metal housing and to which an electrical load arranged outside the housing can be connected,
wherein
• the metal housing comprises a rectangular base having a base inner side and a base outer side, a rectangular cover having a cover inner side and a cover outer side, the size and shape of which substantially correspond to that of the base, and four rectangular side elements which connect the base and the cover and each have an inner side and an outer side,
• the cover has a through-hole through which the pole stud which is electrically insulated from the metal housing is guided outward from the inside of the metal housing,
• the at least one individual cell is in the form of a winding having a first and a second end face and the first end face faces in the direction of the base and the second end face faces in the direction of the cover,
• conductor vanes which are electrically connected to the base of the metal housing exit from the first end face,
• conductor vanes which are electrically connected to the pole stud, which is electrically insulated from the metal housing, exit from the second end face,
• the conductor vanes exiting from the first end face are fixed to an electrically conductive collecting and positioning means, and
• the base has a receiving means for the collecting and positioning means, in which the latter is inserted and fixed, **characterized in that**
• the base has a through-hole as a receiving means for the collecting and positioning means, so that the collecting and positioning means is accessible from outside the metal housing.

2. Battery according to Claim 1, **characterized in that** the collecting and positioning means is a metal clamping rail in which the conductor vanes are fixed.

3. Battery according to either of the preceding claims, **characterized in that** the conductor vanes exiting from the first end face are connected to the positive electrode and the conductor vanes exiting from the second end face are connected to the negative electrode.

4. Battery according to one of the preceding claims, **characterized in that** the conductor vanes exiting from the first end face and/or the collecting and positioning means and/or the base of the metal housing and/or the entire metal housing are made from aluminum or an aluminum alloy.

5. Battery according to one of the preceding claims, **characterized in that**, in addition to the pole stud which is electrically insulated from the metal housing, it comprises a further pole stud which is guided outward from the inside of the metal housing through a through-hole in the metal housing, in particular in the cover of the metal housing, and is electrically connected to one of the electrodes via the metal housing and the collecting and positioning means.

6. Method for manufacturing a battery according to one of the preceding claims, comprising the steps
• providing an individual cell having at least one positive and at least one negative electrode, which is in the form of a winding which has a first and a second end face, wherein conductor vanes connected to the positive electrode exit from the first end face and conductor vanes connected to the negative electrode exit from the second end face,
• arranging a collecting and positioning means on one of the end faces of the winding and fixing the conductor vanes exiting from this end face in or on the collecting and positioning means,
• providing a receptacle having a rectangular base and four side elements arranged at a right angle thereto, whereof the free edges form an opening, wherein the base has a receiving means for the collecting and positioning means, in which the latter can be inserted and fixed, wherein the base has a through-hole as a receiving means for the collecting and positioning means, so that the collecting and positioning means is accessible from outside the metal housing,
• inserting the winding - with the end face which is provided with the collecting and positioning means first - into the receptacle until the collecting and positioning means reaches the base and is inserted into the receiving means,
• fixing the collecting and positioning means in the receiving means, and
• closing the opening by means of a rectangular cover.

7. Method according to Claim 6, **characterized in that** a molded part made from plastics material is placed on the end face provided with the collecting and positioning means prior to the insertion of the cover, which molded part covers the end face completely with the exception of the collecting and positioning means.

## Revendications

1. Batterie comprenant
• un boîtier métallique prismatique pourvu d'une face intérieure et d'une face extérieure,
• au moins un élément individuel pourvu d'au moins une électrode positive et d'au moins une électrode négative, qui sont agencées à l'intérieur du boîtier métallique, et
• un boulon de pôle qui est relié électriquement à ladite au moins une électrode positive ou à ladite au moins une électrode négative, qui est isolé électriquement du boîtier métallique, et auquel peut être raccordé un consommateur électrique agencé à l'extérieur du boîtier, dans lequel
• le boîtier métallique comprend un fond rectangulaire présentant une face intérieure de fond et une face extérieure de fond, un couvercle rectangulaire présentant une face intérieure de couvercle et une face extérieure de couvercle, dont la taille et la forme coïncident sensiblement avec celles du fond, ainsi que quatre éléments latéraux rectangulaires reliant le fond et le couvercle et pourvus chacun d'une face intérieure et d'une face extérieure,
• le couvercle présente une ouverture à travers laquelle le boulon de pôle isolé électriquement du boîtier métallique passe de l'intérieur du boîtier métallique vers l'extérieur,
• ledit au moins un élément individuel se présente sous la forme d'une bobine pourvue d'une première et d'une deuxième face frontale et la première face frontale est tournée vers le fond et la deuxième face frontale est tournée vers le couvercle,
• des languettes déflectrices, qui sont reliées électriquement au fond du boîtier métallique, sortent de la première face frontale,
• des languettes déflectrices, qui sont reliées électriquement au boulon de pôle isolé électriquement du boîtier métallique, sortent de la deuxième face frontale,
• les languettes déflectrices sortant de la première face frontale sont fixées sur un moyen de collecte et de positionnement électroconducteur, et
• le fond comporte un réceptacle, destiné au moyen de collecte et de positionnement, dans lequel il est inséré et dans lequel il est fixé,
**caractérisé en ce que**
• le fond présente une ouverture destinée à accueillir le moyen de collecte et de positionnement, de manière à ce que le moyen de collecte et de positionnement soit accessible de l'extérieur du boîtier métallique.

2. Batterie selon la revendication 1, **caractérisée en ce que** le moyen de collecte et de positionnement est une barre de serrage métallique dans laquelle sont fixées les languettes déflectrices.

3. Batterie selon l'une des revendications précédentes, **caractérisée en ce que** les languettes déflectrices sortant de la première face frontale sont reliées à l'électrode positive et les languettes déflectrices sortant de la deuxième face frontale sont reliées à l'électrode négative.

4. Batterie selon l'une des revendications précédentes, **caractérisée en ce que** les languettes déflectrices sortant de la première face frontale et/ou le moyen de collecte et de positionnement et/ou le fond du boîtier métallique et/ou l'ensemble du boîtier métallique sont constitués d'aluminium ou d'un alliage d'aluminium.

5. Batterie selon l'une des revendications précédentes, **caractérisée en ce qu'**elle comprend, en plus du boulon de pôle isolé électriquement du boîtier métallique, un autre boulon de pôle qui est amené à passer hors de l'intérieur du boîtier métallique à travers une traversée ménagée dans le boîtier métallique, en particulier dans le couvercle du boîtier métallique, et qui est relié électriquement à l'une des électrodes par l'intermédiaire du boîtier métallique et du moyen de collecte et de positionnement.

6. Procédé de fabrication d'une batterie selon l'une des revendications précédentes, comprenant les étapes consistant à
• mettre à disposition un élément individuel pourvu d'au moins une électrode positive et d'au moins une électrode négative, qui se présente sous la forme d'une bobine pourvue d'une première et d'une deuxième face frontale, dans lequel des languettes déflectrices, qui sont reliées à l'électrode positive, sortent de la première face frontale et des languettes déflectrices, qui sont reliées à l'électrode négative, sortent de la deuxième face frontale,
• agencer un moyen de collecte et de positionnement sur l'une des faces frontales de la bobine et fixer les languettes déflectrices sortant de ladite face frontale dans ou sur le moyen de collecte et de positionnement,
• mettre à disposition un conteneur comprend un fond rectangulaire et quatre éléments latéraux agencés à angle droit par rapport à celui-ci, dont les bords libres forment une ouverture, dans lequel le fond comporte un réceptacle, destiné au moyen de collecte et de positionnement, dans lequel il peut être inséré et dans lequel il peut être fixé, dans lequel le fond présente une traversée en tant que réceptacle destiné au moyen de collecte et de positionnement, de manière à ce que le moyen de collecte et de positionnement soit accessible de l'extérieur du boîtier métallique,
• insérer la bobine comprenant la face frontale pourvue du moyen de collecte et de positionnement vers l'avant dans le récipient jusqu'à ce que le moyen de collecte et de positionnement atteigne le fond et soit introduit dans le récipient,
• fixer le moyen de collecte et de positionnement dans le réceptacle, et
• refermer l'ouverture au moyen d'un couvercle rectangulaire.

7. Procédé selon la revendication 6, **caractérisé en ce que**, avant l'insertion du couvercle, une pièce moulée en matière plastique est placée sur la face frontale pourvue du moyen de collecte et de positionnement, laquelle pièce moulée recouvre entièrement la face frontale à l'exception du moyen de collecte et de positionnement.
